# EUROPEAN PATENT SPECIFICATION

(11) **EP 3 633 959 B1**
(45) Date of publication and mention of the grant of the patent: **15.05.2024**
(21) Application number: 19161511.1
(22) Date of filing: 08.03.2019
(51) Int. Cl.: G06N 20/20, G06N 5/022, H04L 67/12

(54) **AUTOMATION OF DATA ANALYTICS IN AN INTERNET OF THINGS (IOT) PLATFORM**
AUTOMATISIERUNG DER DATENANALYSE AUF EINER INTERNET-DER-DINGE (IOT)-PLATTFORM
AUTOMATISATION D'ANALYSES DE DONNÉES DANS UNE PLATEFORME D'INTERNET DES OBJETS (IDO)

(30) Priority: 05.10.2018 IN 201821037802
(43) Date of publication of application: 08.04.2020
(73) Proprietor: Tata Consultancy Services Limited, Maharashtra (IN)
(72) Inventor: CHATTOPADHYAY, TANUSHYAM, 700160 Kolkata - West Bengal (IN); PANDA, SATANIK, 700160 Kolkata - West Bengal (IN); MISRA, PRATEEP, 700160 Kolkata - West Bengal (IN); PAL, ARPAN, 700160 Kolkata - West Bengal (IN); BHATTACHYARYA, INDRAJIT, 700160 Kolkata - West Bengal (IN); AGARWAL, PUNEET, 201309 Noida - Uttar Pradesh (IN); BANDYOPADHYAY, SOMA, 700160 Kolkata - West Bengal (IN); UKIL, ARIJIT, 700160 Kolkata - West Bengal (IN); BANERJEE, SNEHASIS, 700160 Kolkata - West Bengal (IN); DAS, ABHISEK, 700160 Kolkata - West Bengal (IN)
(74) Representative: Goddar, Heinz J.

(56) References cited:
- US-A1- 2018 121 936
- US-A1- 2018 234 303

## Description

### TECHNICAL FIELD

The disclosure herein generally relates to data analytics, and, more particularly, to automation of data analytics in an Internet of Things (IoT) platform.

### BACKGROUND

By definition (advanced) analytics refers to theories, technologies, tools, and processes that enable an in-depth understanding and discovery of actionable insights in big data, which cannot be achieved by traditional data analysis and processing theories, technologies, tools, and processes. Major problem in current existing solutions involve inaccurate cataloging of information to handle problems of different domains, inability to fine tune hyper parameters and metric for processing given set of input sensor data. Further, information gathered from across domains, and subject matter experts involve lots of jargon which are difficult to interpret and build relationship models. This has severe impact over data analytics in an IoT platform as the incoming data is large in volume and probably in different formats which can further lead to inaccurate feature extraction and interpretation from input sensor data.

US 2018/0 234 303 A1 discloses a method, which includes receiving, by a processor, data from one or more communicatively coupled objects associated with a device. The method further includes providing, by the processor, context information to the received data. The method further includes mapping, by the processor, the context information associated with the received data to one or more nodes of a knowledge graph. The method further includes diagnosing, by the processor, a problem with the device, based on knowledge graph information.

US 2018/0 121 936 A1 discloses embodiments for using a mixed internet of things (IoT) device network to improve user satisfaction by a processor. A collaboration of data associated with a user captured from a plurality of types of IoT devices in the IoT network may be gathered. The collaboration of data may be used to determine a level of satisfaction of the user according to a knowledge domain describing a plurality of satisfaction factors and levels in the service based industry such that the collaboration of data is associated with one or more of the plurality of satisfaction factors and levels.

### SUMMARY

Embodiments of the present disclosure present technological improvements as solutions to one or more of the above-mentioned technical problems recognized by the inventors in conventional systems. The invention is defined by the appended independent claims. Preferred embodiments are defined by the dependent claims.

It is to be understood that the following detailed description is exemplary and explanatory only and is not restrictive of the invention which is only defined by the appended claims.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary block diagram of a system for automatically performing data analytics in an Internet of Things (IoT) platform, in accordance with an embodiment of the present disclosure.
FIG. 2 illustrates an exemplary flow diagram of a method for automatically performing data analytics in an Internet of Things (IoT) platform using the system of FIG. 1 in accordance with an embodiment of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the invention, as defined by the appended claims.

As mentioned above (advanced) analytics refers to theories, technologies, tools, and processes that enable an in-depth understanding and discovery of actionable insights in big data, which cannot be achieved by traditional data analysis and processing theories, technologies, tools, and processes. Major problem in current existing solutions involve inaccurate cataloging of information to handle problems of different domains (e.g., media (social media), manufacturing, healthcare, and the like), inability to fine tune hyper parameters and metric for processing given set of input sensor data, etc. Further different sets of hyper parameters and metrics required to be tuned on a specific project requirement (e.g., like Remaining Useful Life prediction for a machine part or a human organ). This also involves lots of jargon in the manner information is received in large volume for data analytics. The existing solutions may also fail to apply machine learning when number of attributes and sensors that gives input are too many which make is difficult to identify whether there is any inherent structure lying with multiple attributes of multiple sensor or in other words whether there exists any mapping between the attribute of one sensor and other attribute of another sensor or not.

Embodiments of the present disclosure provide systems and methods for automatically performing data analytics in an IoT platform. The above technical problem is addressed by the present disclosure by providing a technical solution that involves defining a proper cataloguing service for analytics that support multiple views and exposing basic modules in multi layers of abstraction where each layer can access the contents of lower level by setting parameters of stitching multiple blocks under the bottom layer. These layers of abstractions are named as: Domain, Project, Tasks, Modules, and the like. Further knowledge of multiple stake holders is captured using ontology, represented under a graph for example, but is not limited to, Directed Acyclic Graph (DAG) and persisted in an offline mode for regeneration and reconstruct the DAG for further processing as and when required. Furthermore, all resultant features are obtained using machine learning technique(s)/models for example Rain Forest, Support Vector Regression, or deep learning technique(s)/models for example, but are not limited to Convolutional Neural Network, Long-Short Term Memory, Stacked Auto encoder decoder, and the like), wherein these features are interpreted in terms of business domain jargon. Moreover, one or more supervised, unsupervised, semi-supervised machine learning technique(s) or combinations thereof may be applied on the data being processed to identify the similarity among sensors and further applying tensor factorization on top of it to analyze the data. In an embodiment, the domain specific jargon may be represented in an ontology format, to identify the lexicons of a domain, further define a word-net for that domain and use that structure to map it to the jargon of other domain, which is very much required in a multi stakeholder scenario such as IoT analytics.

In a nutshell, the present disclosure describes interpreting the knowledge of a domain expert using some ontology or as a directed acyclic graph (DAG). The present disclosure further describes method of extracting the inherent structure within the data captured using multiple sensors using data analytics methodologies. Further, the present disclosure enables augmentation of domain knowledge constructed by correcting the expert knowledge based on information obtained by data driven approach as well as correcting features and dependencies obtained using analytical methods by applying expert knowledge obtained from individual or from other sources (e.g., websites, books, literature, and the like). Moreover, the present disclosure enables translation problem statement, root cause, from one knowledge to another using machine aided translation methodology/methodologies. For instance, domain knowledge of healthcare can be aimed to be translated into signal processing and machine learning domain.

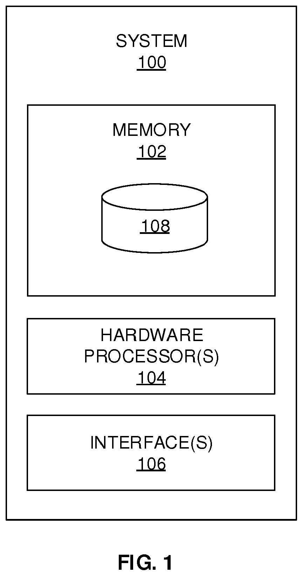

Referring now to the drawings, and more particularly to FIGS. 1 through 2, where similar reference characters denote corresponding features consistently throughout the figures, there are shown preferred embodiments and these embodiments are described in the context of the following exemplary system and/or method.

FIG. 1 illustrates an exemplary block diagram of a system 100 for automatically performing data analytics in an Internet of Things (IoT) platform, in accordance with an embodiment of the present disclosure. The system 100 may also be referred as 'a data analytics system' and interchangeably used hereinafter. In an embodiment, the system 100 includes one or more processors 104, communication interface device(s) or input/output (I/O) interface(s) 106, and one or more data storage devices or memory 102 operatively coupled to the one or more processors 104. The one or more processors 104 may be one or more software processing modules and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the device 100 can be implemented in a variety of computing systems, such as laptop computers, notebooks, hand-held devices, workstations, mainframe computers, servers, a network cloud and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment a database 108 can be stored in the memory 102, wherein the database 108 may comprise, but are not limited to information sensor data (pertaining to sensors deployed in the IoT platform/environment), domain knowledge from one or more sources, the domain knowledge being specific to the sensor input data and the like. More specifically, information pertaining to various sensors, data obtained from various subject matter experts, and sensor attributes, are stored in the database 108. In an embodiment, the memory 102 may store one or more technique(s) (e.g., machine learning model(s), and the like) which when executed by the one or more hardware processors 104 perform the methodology described herein. The memory 102 may further comprise information pertaining to input(s)/output(s) of each step performed by the systems and methods of the present disclosure.

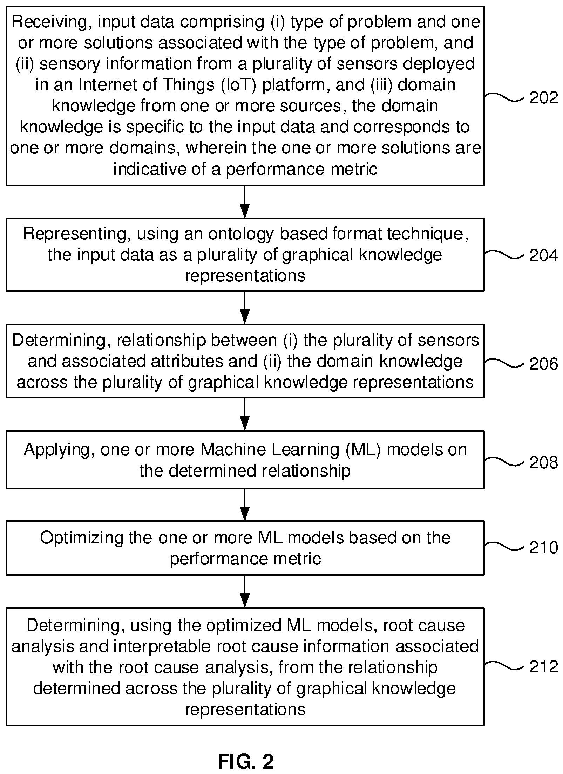

FIG. 2, with reference to FIG. 1, illustrates an exemplary flow diagram of a method for automatically performing data analytics in an Internet of Things (IoT) platform using the system 100 of FIG. 1 in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to the components of the system 100 as depicted in FIG. 1, and the flow diagram as depicted in FIG. 2. Prior to receiving the input data, the system 100 initially constructs domain knowledge graph for one or more domains and identifies relationship among information across the one or more domains. In other words, domain knowledge of relationship in individual domain and also in cross domain relationship is constructed. For instance, say Domain 1 refers to Mechanical engineering. Source in this case for acquiring related domain knowledge may be identified as a mechanical engineer, and/or person(s) who are well-versed or equipped with at least an average knowledge on mechanical domain to identify problem type and also be able to provide or indicate one or more solutions to solve the problem type. For instance, mechanical engineer (say stakeholder 1) provides input data (e.g., type of problem), say that there is a problem with bearing bod and condition of a bearing box can be measured using accelerometer as a sensor (e.g., which in this case could be a solution). This further also gives information on accelerometer that the accelerometer senses the acceleration in three orthogonal directions namely x, y, and z directions/axes. The accelerometer data herein further also provides information on whether abnormality results because of error in bearing cage, motor, in shaft and the like. It is to be noted that each of these components such as the bearing cage, motor, and shaft work and/or operate within a particular operating range under normal operating condition(s). For instance, bearing physics suggests fundamental frequencies as: Outer Race Frequency =236.4 Hz, Inner Race Frequency =296.9 Hz, Rolling Element Frequency =279.8 Hz, Shaft Frequency = 33.3 Hz, Bearing Cage Frequency = 14.7 Hz, and recommended short-time Fourier transform (STFT) features suggest that the abnormal behavior occurs at 14 Hz. Hence it can be concluded that the error is coming at 14 Hz, i.e., bearing cage frequency.

Further say Domain 2 refers to a coder (another stakeholder). The coder due to his/her ability/experience and prior knowledge provides information on accelerometer, for instance, acceleration is double derivative of position with respect to Time. The coder also provides domain knowledge such as `velocity can be obtained by integrating the acceleration over time'. Other domain knowledge that the coder may further provide is that `angular velocity and angular momentum can be derived from radius and linear velocity'.

Using the above domain knowledge obtained from stakeholder 1 and stakeholder 2, cross domain knowledge may be constructed by the system 100. For instance, each of the bearing cage, motor and shaft has a particular working frequency. Here the abnormality, measured in terms of bearing cage, motor or shaft (obtained from domain 1 - or from stakeholder 1) can be mapped and measured by obtaining angular velocity (defined in domain 2 by stakeholder 2). If the sensor attributes are orthogonal (in domain 1, say D1), their values are independent of each other (in domain 2, say D2). If task at hand is to choose a state among one or more states from a finite number of states, then it is a classification problem. Root cause can be identified from the most contributing feature in a classifier or by applying Bayesian Network. Different performance metrics for the task of classifications are Recall, Precision, Accuracy, F-Score, and the like can be measured.

Referring back to steps, in an embodiment of the present disclosure, at step 202, the one or more hardware processors 104 receive, input data comprising (i) type of problem and one or more solutions associated with the type of problem, and (ii) sensory information from a plurality of sensors deployed in an Internet of Things (IoT) platform, and (iii) domain knowledge from one or more sources, the domain knowledge is specific to the input data and corresponds to one or more domains. In an embodiment of the present disclosure, the one or more solutions are indicative of a performance metric (e.g., recall, precision, Fscore, and the like). The sources can be a website, books, literature, and the like, in one example embodiment. In an embodiment, considering the above domain knowledge scenarios, input data may comprise (i) type of problem may be defined as "to determine whether a bearing box is working properly or not and if not why it is not working in terms of accuracy", (ii) data related to bearing box can be obtained from the accelerometer sensor which has three attributes namely acceleration in the direction of x, y, and z coordinates, and (iii) domain knowledge (e.g., say Domain 2 wherein Coder is the stakeholder) may be obtained in addition obtaining angular velocity from the frequency, wherein frequency can be obtained from Fast Fourier Transformation. Since the coder may not be able to anticipate all possible implementation knowledge, he may see the problem to solve. Once this knowledge is gathered, the initial knowledgebase is augmented with this new knowledge. In other words, the domain knowledge which was constructed initially prior to performing step 2, that domain knowledge gets augmented with this new knowledge.

In an embodiment of the present disclosure, at step 204, the one or more hardware processors 104 represent, using an ontology based format technique, the input data as a plurality of graphical knowledge representations. In the present disclosure, example of the plurality of graphical knowledge representations, may comprise but are not limited to, Directed Acyclic Graph (DAG). For instance, the input data is annotated as per the knowledge graph defined by the stakeholder (say stakeholder 1 which in this case is a mechanical engineer). Specifically "accelerometer is a type of sensor", whose attributes are x, y, and z respectively. Now using the cross domain knowledge the problem is translated to apply Short Term Fourier Transformation (STFT) or Fast Fourier Transform (FFT) as a feature on the attributes of the sensor(s). In an embodiment, Short Term Fourier transformation (STFT) is a Fourier Transformation over a short time window. Hence the expressions STFT and FFT may be interchangeably used herein. In the present disclosure, STFT is applicable to the scenarios when FFT is applied over a short time of window, in one example embodiment.

In an embodiment of the present disclosure, at step 206, the one or more hardware processors 104 determine, relationship between (i) the plurality of sensors and associated attributes and (ii) the domain knowledge across the plurality of graphical knowledge representations. For instance, the relationship between the plurality of sensors and associated attributes may comprise, but is not limited to, `Domain 1 defined that the sensor attributes are orthogonal.' Another instance wherein relationship between the domain knowledge across the plurality of graphical knowledge representations may comprise, but is not limited to, `as Domain 1 defined that the sensor attributes are orthogonal, the FFT should consider each axis as a separate feature'. In an embodiment, the step of determining, relationship between (i) the plurality of sensors and associated attributes and (ii) the domain knowledge across the plurality of graphical knowledge representations comprises identifying jargon in the domain knowledge across the plurality of graphical knowledge representations; and translating the jargon into interpretable data using one or more translation techniques (e.g., look-up of the cross-domain knowledge using techniques such as string similarity measures, or embedding-based techniques (or translation technique(s) such as word2vec or node2vec techniques). In an embodiment, wherein the jargon is translated into the interpretable data at one or more levels comprising a Lexicon level, a word level, a sentence level, a grammar level, or combinations thereof; and constructing a lexical database (e.g., a WordNet database) for each of the one or more domains, and wherein the constructed database comprises a mapping between the interpretable data. The lexical database may be stored in the memory 102, in one example embodiment. Jargon translation is explained by way of following example, wherein the example shall not be construed as limited the scope of the present disclosure. For instance, say, information from Mechanical Engineer is received as: Condition of a bearing box can be measured using accelerometer as a sensor. Each works under normal operating range under normal operating condition. Cross-domain translation can be achieved by: computing Velocity by taking integration of acceleration over time, and deriving angular velocity from linear velocity. Further frequency is derived (or obtained from the angular velocity, wherein short-time Fourier transform (STFT) is performed for analysis of frequency. Coder on the other hand says need to identify STFT over operating range for problem. The above example of jargon translation is therefore an output that can be referred as interpretable data.

In an embodiment of the present disclosure, at step 208, the one or more hardware processors 104 apply, one or more Machine Learning (ML) models on the determined relationship. Applying the one or more Machine Learning (ML) models on the determined relationship comprises executing, via the one or more hardware processors 104 the ML models on the determined relationship. For instance, cross domain knowledge gives an insight that the given problem statement is a classification and a root cause analysis problem. In an embodiment, the one or more ML models comprise, but are not limited to Convolutional Neural Network (CNN), Recurrent Neural Network (RNN), Support Vector Machine (SVM), Rain Forest (RF), and the like which may be applied depending on the ML task type (e.g., regression, anomaly detection, Denoising signal(s) having an inherent structure in it, and the like).

In an embodiment of the present disclosure, at step 210, the one or more hardware processors 104 optimize the one or more ML models based on the performance metric. The present disclosure, providing one or more users, the flexibility of defining a performance metric for different ML tasks depending on logic provided by domain expert(s)/subject matter experts (also referred as source). For each of the ML task, one or more feature reduction techniques may be used with a focus on optimizing the performance metric as described above. Few examples of feature reduction techniques being used are listed below, and shall not be construed as limited the scope of the present disclosure:
1. Applying any or a combination of feature selection method followed by feature listing
2. Applying Deep learning as the ML method and applying trace back method to identifying root cause In case of deep learning where the trace backing is not adequate to interpret the features, Bayesian Network like model(s) may be applied for root cause analysis or weights of CNN/RNN of each layer may be utilized to find the root cause. For the above points 1 and 2, research work authored by Snehasis Banerjee, T. Chattopadhyay, Utpal Garain, et.al. , titled "Towards Wide Learning - Experiments in Healthcare", Workshop of Machine Learning for Health Care, NIPS 2016, Barcelona, 2016 can be referred.
3. Applying stacked encoder-decoder which may be a single layered, too. For the point 3, research work authored by Tulika Bose, T. Chattopadhyay et.al, titled "MACHINE LOAD ESTIMATION VIA STACKED AUTOENCODER REGRESSION," IEEE International Conference on Acoustics, Speech and Signal Processing (ICASSP 2018), Canada, April 2018 can be referred.

In an embodiment of the present disclosure, at step 210, the one or more hardware processors 104 determine, using the optimized ML models, root cause analysis and interpretable root cause information associated with the root cause analysis, from the relationship determined across the plurality of graphical knowledge representations. For instance, result of a classifier shows that the 33 Hertz is the most discriminating feature whereas normal operating frequency of shaft is 30-40 Hertz. So it can be concluded that the machine/bearing box is not working properly because of error in shaft. In the above example, the interpretable root cause information herein refers to 'machine/bearing box is not working properly because of error in shaft' and root cause analysis can be referred as `33 Hertz is the most discriminating feature whereas normal operating frequency of shaft is 30-40 Hertz which has resulted in machine not working properly'. Based on the domain knowledge obtained from the one or more sources (e.g., stakeholder 1 and stakeholder 2 from domains 1 and 2 respectively, the above interpretable root cause information was determined. It is to be understood by a person having ordinary skill in the art and person skilled in the art that interpretable root cause information that is being determined for a given problem (or type of problem or nature of problem under consideration) may vary based on the domain knowledge obtained from the one or more sources. For instance, the interpretable root cause information may not be same as above if the domain knowledge is obtained from say a stakeholder 3 (e.g., who is less qualified but has hands on experience in repairing bearing box and machine operating tools when compared with mechanical engineer). The steps 202 till 212 are automated by the present disclosure to thus enabling automation of data analytics in IoT platform as described herein by way of non-limiting examples.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computerusable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a scope of disclosed embodiments being indicated by the following claims.

## Claims

1. A processor-implemented method for enabling automation of data analytics in an Internet of Things IoT platform, executed by one or more hardware processors (104), the method comprising:
constructing, a domain knowledge graph for each of one or more domains and identifying a relationship among information across the one or more domains;
receiving, input data comprising type of problem and one or more solutions associated with the type of problem, and sensory information associated with at least one of the one or more domains from a plurality of sensors deployed in the IoT platform, and domain knowledge from one or more sources, the domain knowledge is specific to the input data and corresponds to the one or more domains (202), wherein the one or more solutions are indicative of a performance metric;
representing, using an ontology-based format technique, the input data as a plurality of graphical knowledge representations (204);
determining, a relationship between the plurality of sensors with their associated attributes and the domain knowledge across the plurality of graphical knowledge representations (206) by identifying jargon in the domain knowledge across the plurality of graphical knowledge representations; and
translating domain-specific jargon into interpretable data through look-up of the cross-domain knowledge using one or more translation techniques, wherein the translation techniques include at least one of word2vec techniques and node2vec techniques, constructing a database for each of the one or more domains based on the translated domain specific jargon, wherein the constructed database comprises a mapping between the interpretable data;
applying, one or more Machine Learning ML models on the determined relationship (208);
optimizing the one or more ML models based on the performance metric (210); and
determining, using the optimized ML models, root cause analysis and interpretable root cause information associated with the root cause analysis, from the relationship determined across the plurality of graphical knowledge representations (212).

2. The method as claimed in claim 1, the interpretable root cause information varies based on the domain knowledge obtained from the one or more sources.

3. The method as claimed in claim 1, wherein the jargon is translated into the interpretable data at one or more levels comprising a Lexicon level, a word level, a sentence level, a grammar level, or combinations thereof.

4. A system (100) for enabling automation of data analytics in an Internet of Things IoT platform, comprising:
a memory (102) storing instructions;
one or more communication interfaces (106); and one or more hardware processors (104) coupled to the memory (102) via the one or more communication interfaces (106), wherein the one or more hardware processors (104) are configured by the instructions to:
construct, a domain knowledge graph for each of one or more domains and identifying a relationship among information across the one or more domains;
receive, input data comprising type of problem and one or more solutions associated with the type of problem, and sensory information associated with at least one of the one or more domains from a plurality of sensors deployed in the IoT platform, and domain knowledge from one or more sources, the domain knowledge is specific to the input data and corresponds to the one or more domains, wherein the one or more solutions are indicative of a performance metric;
represent, using an ontology-based format technique, the input data as a plurality of graphical knowledge representations;
determine, a relationship between the plurality of sensors with their associated attributes and the domain knowledge across the plurality of graphical knowledge representations by identifying jargon in the domain knowledge across the plurality of graphical knowledge representations; and
translating domain-specific jargon into interpretable data through look-up of the cross-domain knowledge using one or more translation techniques wherein the translation techniques include at least one of word2vec techniques and node2vec techniques, constructing a database for each of the one or more domains, based on the translated domain specific jargon, wherein the constructed database comprises a mapping between the interpretable data;
apply, one or more Machine Learning ML models on the determined relationship;
optimize the one or more ML models based on the performance metric; and
determine, using the optimized ML models, root cause analysis and interpretable root cause information associated with the root cause analysis, from the relationship determined across the plurality of graphical knowledge representations.

5. The system as claimed in claim 4, the interpretable root cause information varies based on the domain knowledge obtained from the one or more sources.

6. The system as claimed in claim 4, wherein the jargon is translated into the interpretable data at one or more levels comprising a Lexicon level, a word level, a sentence level, a grammar level, or combinations thereof.

7. One or more non-transitory machine-readable information storage mediums for enabling automation of data analytics in an Internet of Things IoT platform comprising one or more instructions which when executed by one or more hardware processors cause:
constructing, a domain knowledge graph for each of one or more domains and identifying a relationship among information across the one or more domains;
receiving, input data comprising type of problem and one or more solutions associated with the type of problem, and sensory information associated with at least one of the one or more domains from a plurality of sensors deployed in the IoT platform, and domain knowledge from one or more sources, the domain knowledge is specific to the input data and corresponds to the one or more domains, wherein the one or more solutions are indicative of a performance metric;
representing, using an ontology-based format technique, the input data as a plurality of graphical knowledge representations;
determining, a relationship between the plurality of sensors with their associated attributes and the domain knowledge across the plurality of graphical knowledge representations by identifying jargon in the domain knowledge across the plurality of graphical knowledge representations; and
translating domain-specific jargon into interpretable data through look-up of the cross-domain knowledge using one or more translation techniques, wherein the translation techniques include at least one of word2vec techniques and node2vec techniques, constructing a database for each of the one or more domains based on the translated domain specific jargon, wherein the constructed database comprises a mapping between the interpretable data;
applying, one or more Machine Learning ML models on the determined relationship;
optimizing the one or more ML models based on the performance metric; and
determining, using the optimized ML models, root cause analysis and interpretable root cause information associated with the root cause analysis, from the relationship determined across the plurality of graphical knowledge representations.

8. The one or more non-transitory machine-readable information storage mediums of claim 7, the interpretable root cause information varies based on the domain knowledge obtained from the one or more sources.

9. The one or more non-transitory machine-readable information storage mediums of claim 7, wherein the jargon is translated into the interpretable data at one or more levels comprising a Lexicon level, a word level, a sentence level, a grammar level, or combinations thereof.

## Patentansprüche

1. Prozessorimplementiertes Verfahren zum Ermöglichen einer Automatisierung von Datenanalyse in einer Internet-der-Dinge-IoT-Plattform, das durch einen oder mehrere Hardwareprozessoren (104) ausgeführt wird, wobei das Verfahren umfasst:
Konstruieren eines Domänenwissensgraphen für jede von einer oder mehreren Domänen und Identifizieren einer Beziehung zwischen Informationen über die eine oder die mehreren Domänen hinweg;
Empfangen von Eingabedaten, die einen Problemtyp und eine oder mehrere Lösungen, die dem Problemtyp zugeordnet sind, und sensorische Informationen, die mindestens einer der einen oder der mehreren Domänen zugeordnet sind, von einer Mehrzahl von Sensoren, die in der IoT-Plattform eingesetzt sind, und Domänenwissen von einer oder mehreren Quellen umfassen, wobei das Domänenwissen spezifisch für die Eingabedaten ist und der einen oder den mehreren Domänen (202) entspricht, wobei die eine oder die mehreren Lösungen eine Leistungsmetrik angeben;
Darstellen der Eingabedaten unter Verwendung einer ontologiebasierten Formattechnik als eine Mehrzahl von grafischen Wissensdarstellungen (204);
Bestimmen einer Beziehung zwischen der Mehrzahl von Sensoren mit ihren zugeordneten Attributen und dem Domänenwissen über die Mehrzahl von grafischen Wissensdarstellungen (206) hinweg durch Identifizieren von Jargon in dem Domänenwissen über die Mehrzahl von grafischen Wissensdarstellungen hinweg; und
Übersetzen von domänenspezifischen Jargon in interpretierbare Daten durch Nachschlagen des domänenübergreifenden Wissens unter Verwendung einer oder mehrerer Übersetzungstechniken, wobei die Übersetzungstechniken mindestens eine von word2vec-Techniken und node2vec-Techniken umfassen, Konstruieren einer Datenbank für jede der einen oder der mehreren Domänen basierend auf dem übersetzten domänenspezifischen Jargon, wobei die konstruierte Datenbank eine Abbildung zwischen den interpretierbaren Daten umfasst;
Anwenden eines oder mehrerer Machine Learning ML-Modelle auf die bestimmte Beziehung (208);
Optimieren des einen oder der mehreren ML-Modelle basierend auf der Leistungsmetrik (210); und
Bestimmen, unter Verwendung der optimierten ML-Modelle, einer Grundursachenanalyse und interpretierbarer Grundursacheninformationen, die der Grundursachenanalyse zugeordnet sind, aus der über die Mehrzahl von grafischen Wissensdarstellungen (212) hinweg bestimmten Beziehung.

2. Verfahren nach Anspruch 1, wobei die interpretierbaren Grundursacheninformationen basierend auf dem Domänenwissen variieren, das von der einen oder den mehreren Quellen erhalten wird.

3. Verfahren nach Anspruch 1, wobei das Jargon in die interpretierbaren Daten auf einer oder mehreren Ebenen übersetzt wird, die eine Lexikonebene, eine Wortebene, eine Satzebene, eine Grammatikebene oder Kombinationen davon umfassen.

4. System (100) zum Ermöglichen einer Automatisierung von Datenanalyse in einer Internet-der-Dinge-IoT-Plattform, umfassend:
einen Speicher (102), der Anweisungen speichert;
eine oder mehrere Kommunikationsschnittstellen (106); und
einen oder mehrere Hardwareprozessoren (104), die über die eine oder die mehreren Kommunikationsschnittstellen (106) mit dem Speicher (102) gekoppelt sind, wobei der eine oder die mehreren Hardwareprozessoren (104) durch die Anweisungen konfiguriert sind zum:
Konstruieren eines Domänenwissensgraphen für jede von einer oder mehreren Domänen und Identifizieren einer Beziehung zwischen Informationen über die eine oder die mehreren Domänen hinweg;
Empfangen von Eingabedaten, die einen Problemtyp und eine oder mehrere Lösungen, die dem Problemtyp zugeordnet sind, und sensorische Informationen, die mindestens einer der einen oder der mehreren Domänen zugeordnet sind, von einer Mehrzahl von Sensoren, die in der IoT-Plattform eingesetzt sind, und Domänenwissen von einer oder mehreren Quellen umfassen, wobei das Domänenwissen spezifisch für die Eingabedaten ist und der einen oder den mehreren Domänen entspricht, wobei die eine oder die mehreren Lösungen eine Leistungsmetrik angeben;
Darstellen der Eingabedaten unter Verwendung einer ontologiebasierten Formattechnik als eine Mehrzahl von grafischen Wissensdarstellungen;
Bestimmen einer Beziehung zwischen der Mehrzahl von Sensoren mit ihren zugeordneten Attributen und dem Domänenwissen über die Mehrzahl von grafischen Wissensdarstellungen hinweg durch Identifizieren von Jargon in dem Domänenwissen über die Mehrzahl von grafischen Wissensdarstellungen hinweg; und
Übersetzen von domänenspezifischen Jargon in interpretierbare Daten durch Nachschlagen des domänenübergreifenden Wissens unter Verwendung einer oder mehrerer Übersetzungstechniken, wobei die Übersetzungstechniken mindestens eine von word2vec-Techniken und node2vec-Techniken umfassen, Konstruieren einer Datenbank für jede der einen oder der mehreren Domänen basierend auf dem übersetzten domänenspezifischen Jargon, wobei die konstruierte Datenbank eine Abbildung zwischen den interpretierbaren Daten umfasst;
Anwenden eines oder mehrerer Machine Learning ML-Modelle auf die bestimmte Beziehung;
Optimieren des einen oder der mehreren ML-Modelle basierend auf der Leistungsmetrik; und
Bestimmen, unter Verwendung der optimierten ML-Modelle, einer Grundursachenanalyse und interpretierbarer Grundursacheninformationen, die der Grundursachenanalyse zugeordnet sind, aus der über die Mehrzahl von grafischen Wissensdarstellungen hinweg bestimmten Beziehung.

5. System nach Anspruch 4, wobei die interpretierbaren Grundursacheninformationen basierend auf dem Domänenwissen variieren, das von der einen oder den mehreren Quellen erhalten wird.

6. System nach Anspruch 4, wobei das Jargon in die interpretierbaren Daten auf einer oder mehreren Ebenen übersetzt wird, die eine Lexikonebene, eine Wortebene, eine Satzebene, eine Grammatikebene oder Kombinationen davon umfassen.

7. Ein oder mehrere nichtflüchtige maschinenlesbare Informationsspeichermedien zum Ermöglichen einer Automatisierung von Datenanalyse in einer Internet-der-Dinge-IoT-Plattform, umfassend eine oder mehrere Anweisungen, die, wenn sie durch einen oder mehrere Hardwareprozessoren ausgeführt werden, bewirken:
Konstruieren eines Domänenwissensgraphen für jede von einer oder mehreren Domänen und Identifizieren einer Beziehung zwischen Informationen über die eine oder die mehreren Domänen hinweg;
Empfangen von Eingabedaten, die einen Problemtyp und eine oder mehrere Lösungen, die dem Problemtyp zugeordnet sind, und sensorische Informationen, die mindestens einer der einen oder der mehreren Domänen zugeordnet sind, von einer Mehrzahl von Sensoren, die in der IoT-Plattform eingesetzt sind, und Domänenwissen von einer oder mehreren Quellen umfassen, wobei das Domänenwissen spezifisch für die Eingabedaten ist und der einen oder den mehreren Domänen entspricht, wobei die eine oder die mehreren Lösungen eine Leistungsmetrik angeben;
Darstellen der Eingabedaten unter Verwendung einer ontologiebasierten Formattechnik als eine Mehrzahl von grafischen Wissensdarstellungen;
Bestimmen einer Beziehung zwischen der Mehrzahl von Sensoren mit ihren zugeordneten Attributen und dem Domänenwissen über die Mehrzahl von grafischen Wissensdarstellungen hinweg durch Identifizieren von Jargon in dem Domänenwissen über die Mehrzahl von grafischen Wissensdarstellungen hinweg; und
Übersetzen von domänenspezifischen Jargon in interpretierbare Daten durch Nachschlagen des domänenübergreifenden Wissens unter Verwendung einer oder mehrerer Übersetzungstechniken, wobei die Übersetzungstechniken mindestens eine von word2vec-Techniken und node2vec-Techniken umfassen, Konstruieren einer Datenbank für jede der einen oder der mehreren Domänen basierend auf dem übersetzten domänenspezifischen Jargon, wobei die konstruierte Datenbank eine Abbildung zwischen den interpretierbaren Daten umfasst;
Anwenden eines oder mehrerer Machine Learning ML-Modelle auf die bestimmte Beziehung;
Optimieren des einen oder der mehreren ML-Modelle basierend auf der Leistungsmetrik; und
Bestimmen, unter Verwendung der optimierten ML-Modelle, einer Grundursachenanalyse und interpretierbarer Grundursacheninformationen, die der Grundursachenanalyse zugeordnet sind, aus der über die Mehrzahl von grafischen Wissensdarstellungen hinweg bestimmten Beziehung.

8. Ein oder mehrere nichtflüchtige maschinenlesbare Informationsspeichermedien nach Anspruch 7, wobei die interpretierbaren Grundursacheninformationen basierend auf dem Domänenwissen variieren, das von der einen oder den mehreren Quellen erhalten wird.

9. Ein oder mehrere nichtflüchtige maschinenlesbare Informationsspeichermedien nach Anspruch 7, wobei das Jargon in die interpretierbaren Daten auf einer oder mehreren Ebenen übersetzt wird, die eine Lexikonebene, eine Wortebene, eine Satzebene, eine Grammatikebene oder Kombinationen davon umfassen.

## Revendications

1. Procédé mis en oeuvre par processeur pour permettre l'automatisation de l'analyse de données dans une plate-forme de l'Internet des objets, IdO, exécutée par un ou plusieurs processeurs matériels (104), le procédé comprenant :
la construction d'un graphe de connaissances de domaine pour chacun d'un ou plusieurs domaines et l'identification d'une relation dans les informations entre les un ou plusieurs domaines ;
la réception de données d'entrée comprenant le type de problème et une ou plusieurs solutions associées au type de problème, et d'informations sensorielles associées à au moins un des un ou plusieurs domaines depuis une pluralité de capteurs déployés dans la plate-forme IdO, et de connaissances de domaine depuis une ou plusieurs sources, les connaissances de domaine étant spécifiques aux données d'entrée et correspondant aux un ou plusieurs domaines (202), dans lequel les une ou plusieurs solutions indiquent une métrique de performance ;
la représentation, au moyen d'une technique de format à base d'ontologie, des données d'entrée sous la forme d'une pluralité de représentations graphiques de connaissances (204) ;
la détermination d'une relation entre la pluralité de capteurs avec leurs attributs associés et les connaissances de domaine sur l'ensemble de la pluralité de représentations graphiques de connaissances (206) par identification d'un jargon dans les connaissances de domaine sur l'ensemble de la pluralité de représentations graphiques de connaissances ; et
la traduction du jargon spécifique à un domaine en données interprétables par examen des connaissances de domaine croisées au moyen d'une ou plusieurs techniques de traduction, dans lequel les techniques de traduction comprennent au moins l'une parmi des techniques word2vec et des techniques node2vec, la construction d'une base de données pour chacun des un ou plusieurs domaines sur la base du jargon spécifique à un domaine traduit, dans lequel la base de données construite comprend une mise en correspondance entre les données interprétables ;
l'application d'un ou plusieurs modèles d'apprentissage automatique ML sur la relation déterminée (208) ;
l'optimisation des un ou plusieurs modèles ML sur la base de la métrique de performance (210) ; et
la détermination, au moyen des modèles ML optimisés, de l'analyse de cause première et d'informations de cause première interprétables associées à l'analyse de cause première, à partir de la relation déterminée sur l'ensemble de la pluralité de représentations graphiques de connaissances (212).

2. Procédé selon la revendication 1, les informations de cause première interprétables variant sur la base des connaissances de domaine obtenues à partir des une ou plusieurs sources.

3. Procédé selon la revendication 1, dans lequel le jargon est traduit en données interprétables à un ou plusieurs niveaux comprenant un niveau de lexique, un niveau de mot, un niveau de phrase, un niveau de grammaire, ou des combinaisons de ceux-ci.

4. Système (100) pour permettre l'automatisation de l'analyse de données dans une plate-forme de l'Internet des objets, IdO, comprenant :
une mémoire (102) stockant des instructions ;
une ou plusieurs interfaces de communication (106) ; et
un ou plusieurs processeurs matériels (104) couplés à la mémoire (102) par l'intermédiaire des une ou plusieurs interfaces de communication (106), dans lequel les un ou plusieurs processeurs matériels (104) sont configurés par les instructions pour :
construire un graphe de connaissances de domaine pour chacun d'un ou plusieurs domaines et identifier une relation dans les informations entre les un ou plusieurs domaines ;
recevoir des données d'entrée comprenant un type de problème et une ou plusieurs solutions associé à the type de problème, et des informations sensorielles associées à au moins un des un ou plusieurs domaines depuis une pluralité de capteurs déployés dans la plate-forme IdO, et des connaissances de domaine depuis une ou plusieurs sources, les connaissances de domaine étant spécifiques aux données d'entrée et correspondant aux un ou plusieurs domaines, dans lequel les une ou plusieurs solutions indiquent une métrique de performance ;
représenter, au moyen d'une technique de format à base d'ontologie, les données d'entrée sous la forme d'une pluralité de représentations graphiques de connaissances ;
déterminer une relation entre la pluralité de capteurs avec leurs attributs associés et les connaissances de domaine sur l'ensemble de la pluralité de représentations graphiques de connaissances par identification d'un jargon dans les connaissances de domaine sur l'ensemble de la pluralité de représentations graphiques de connaissances ; et
la traduction du jargon spécifique à un domaine en données interprétables par examen des connaissances de domaine croisées au moyen d'une ou plusieurs techniques de traduction dans lequel les techniques de traduction comprennent au moins l'une parmi des techniques word2vec et des techniques node2vec, la construction d'une base de données pour chacun des un ou plusieurs domaines, sur la base du jargon spécifique à un domaine traduit, dans lequel la base de données construite comprend une mise en correspondance entre les données interprétables ;
appliquer un ou plusieurs modèles d'apprentissage automatique ML sur la relation déterminée ;
optimiser les un ou plusieurs modèles ML sur la base de la métrique de performance ; et
déterminer, au moyen des modèles ML optimisés, une analyse de cause première et des informations de cause première interprétables associées à l'analyse de cause première, à partir de la relation déterminée sur l'ensemble de la pluralité de représentations graphiques de connaissances.

5. Système selon la revendication 4, les informations de cause première interprétables variant sur la base des connaissances de domaine obtenues à partir des une ou plusieurs sources.

6. Système selon la revendication 4, dans lequel le jargon est traduit en données interprétables à un ou plusieurs niveaux comprenant un niveau de lexique, un niveau de mot, un niveau de phrase, un niveau de grammaire, ou des combinaisons de ceux-ci.

7. Un ou plusieurs supports de stockage d'informations non transitoires lisibles par machine pour permettre l'automatisation de l'analyse de données dans une plate-forme de l'Internet des objets, IdO, comprenant une ou plusieurs instructions qui, lorsqu'elles sont exécutées par un ou plusieurs processeurs matériels, provoquent :
la construction d'un graphe de connaissances de domaine pour chacun d'un ou plusieurs domaines et l'identification d'une relation dans les informations entre les un ou plusieurs domaines ;
la réception de données d'entrée comprenant le type de problème et une ou plusieurs solutions associées au type de problème, et d'informations sensorielles associées à au moins un des un ou plusieurs domaines depuis une pluralité de capteurs déployés dans la plate-forme IdO, et de connaissances de domaine depuis une ou plusieurs sources, les connaissances de domaine étant spécifiques aux données d'entrée et correspondant aux un ou plusieurs domaines, dans lesquels les une ou plusieurs solutions indiquent une métrique de performance ;
la représentation, au moyen d'une technique de format à base d'ontologie, des données d'entrée sous la forme d'une pluralité de représentations graphiques de connaissances ;
la détermination d'une relation entre la pluralité de capteurs avec leurs attributs associés et les connaissances de domaine sur l'ensemble de la pluralité de représentations graphiques de connaissances par identification d'un jargon dans les connaissances de domaine sur l'ensemble de la pluralité de représentations graphiques de connaissances ; et
la traduction du jargon spécifique à un domaine en données interprétables par examen des connaissances de domaine croisées au moyen d'une ou plusieurs techniques de traduction, dans lesquels les techniques de traduction comprennent au moins l'une parmi des techniques word2vec et des techniques node2vec, la construction d'une base de données pour chacun des un ou plusieurs domaines sur la base du jargon spécifique à un domaine traduit, dans lesquels la base de données construite comprend une mise en correspondance entre les données interprétables ;
l'application d'un ou plusieurs modèles d'apprentissage automatique ML sur la relation déterminée ;
l'optimisation des un ou plusieurs modèles ML sur la base de la métrique de performance ; et
la détermination, au moyen des modèles ML optimisés, de l'analyse de cause première et d'informations de cause première interprétables associées à l'analyse de cause première, à partir de la relation déterminé sur l'ensemble de la pluralité de représentations graphiques de connaissances.

8. Un ou plusieurs supports de stockage d'informations non transitoires lisibles par machine selon la revendication 7, les informations de cause première interprétables variant sur la base des connaissances de domaine obtenues à partir des une ou plusieurs sources.

9. Un ou plusieurs supports de stockage d'informations non transitoires lisibles par machine selon la revendication 7, dans lesquels le jargon est traduit en données interprétables à un ou plusieurs niveaux comprenant un niveau de lexique, un niveau de mot, un niveau de phrase, un niveau de grammaire, ou des combinaisons de ceux-ci.
